# EUROPEAN PATENT APPLICATION

(11) **EP 2 461 628 A1**
(43) Date of publication of application: **06.06.2012**
(21) Application number: 09847731.8
(22) Date of filing: 09.12.2009
(51) Int. Cl.: H04W 36/34

(54) **MESSAGE-SENDING METHOD AND SERVING GPRS SUPPORT NODE**

(30) Priority: 29.07.2009 CN 200910160857
(71) Applicant: ZTE Corporation, Shenzhen, Guangdong 518057 (CN)
(72) Inventor: LIANG, Shuang, Guangdong 518057 (CN); YE, Minya, Guangdong 518057 (CN); WANG, Qianchun, Guangdong 518057 (CN); LU, Fei, Guangdong 518057 (CN); ZHU, Jinguo, Guangdong 518057 (CN)
(74) Representative: Andersen, Bjørn Subramaniam
(86) International application number: PCT/CN2009/075442
(87) International publication number: WO 2011/011945

(57) **Abstract**

The present invention provides a message sending method and a serving GPRS support node. The method includes: when the SGSN, to which user equipment is connected, switches from a first SGSN to a second SGSN, the first SGSN sending to the second SGSN a message carrying context information of the user equipment, wherein the context information includes the gateway type of packet data network to which the user equipment is connected. The present invention achieves the effects that the new SGSN can acquire the gateway type of the packet data network PDN and correctly select the type of the interface in use according to the gateway type.

## Description

### Field of the Invention

The present invention relates to the communication field, and in particular to a message sending method and a serving GPRS support node.

### Background of the Invention

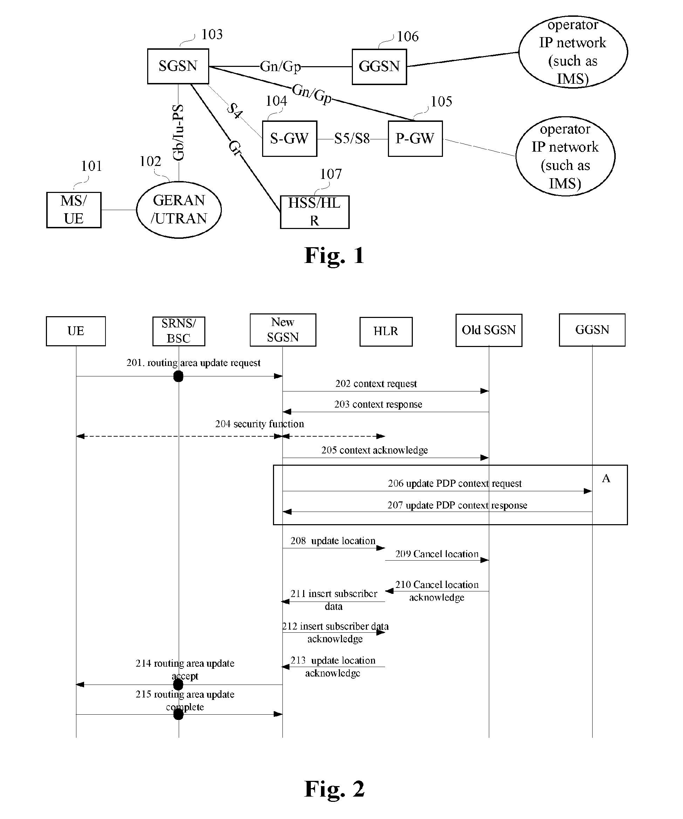

At present, the 3rd Generation Partnership Project (referred to as 3GPP) standardization work team now focuses on the study of evolution of Packet Switched Core (referred to as PS core) and of Universal Mobile Telecommunication System Radio Access Network (referred to as UTRAN), in order to enable the evolved PS Core (referred to as EPC) to provide higher transmission rate and shorter transmission delay, and support mobility management among the evolved UTRAN (Evolved UTRAN, referred to as E-UTRAN), Global System for Mobile communications Enhanced Data Rate for GSM Evolution radio access network (referred to as GERAN), UTRAN, Wireless Local Area Network (referred to as WLAN) and other non-3GPP access networks. The evolved mobile communication system is referred to as Evolved Packet System (referred to as EPS). Figure 1 is a schematic diagram of network architecture according to relevant technology. The entities shown in Figure 1 are described in detail hereinafter.

Mobile Station (referred to as MS, also as mobile terminal)/User Equipment (referred to as UE) 101, which has the capability of accessing two wireless networks, is referred to as a dual-mode terminal. In the following description, UE is a dual-mode terminal capable of accessing UMTS/GSM and EPS networks, and MS/UE is uniformly described as UE.

GERAN/UTRAN 102 is a radio access network of the traditional GSM/UMTS network.

Serving GPRS (General Packet Radio Service) Support Node (referred to as SGSN) 103 is a control network element of the GPRS network, which mainly functions to record the location information of the UE, and accomplish sending and receiving of mobile packet data between the UE and Gateway GPRS Supporting Node (referred to as GGSN).

Serving gateway (referred to as S-GW) 104 is a user plane entity and is responsible for user plane data routing processing.

Packet Data Network Gateway (referred to as PDN GW or P-GW) 105 is responsible for the gateway functions of Packet Data Network (referred to as PDN) which the UE accesses.

The P-GW and the S-GW can be provided either in a single physical entity as shown in Figure 1, or in different physical entities.

Gateway GPRS (General Packet Radio Service) Support Node (referred to as GGSN) 106 supports the edge routing function of the GPRS network, viz. the GGSN is responsible for routing and forwarding data of the GPRS network, and protecting the intactness of data of the GPRS network through the firewall and filtering functions. The GGSN also has the function of accounting.

The PGW has all the functions of the GGSN, viz. the GGSN can be regarded as a sub function of the PGW co-located in the PGW. Thus, the SGSN can be directly connected to the PGW, using a Gn/Gp interface.

Home Subscriber Server (referred to as HSS)/Home Location Register (referred to as HLR) 107 is a primary user database supporting calling/session.

IP (Internet Protocol) Multimedia Core Network Subsystem (referred to as IMS) is an IP-based network architecture proposed by the 3GPP. It constructs an open and flexible service environment, which supports multimedia applications and provides rich multimedia services to the users. IMS is an IP-based telecommunication network architecture, irrelative to access technology, and can provide services to the mobile cellular networks such as the GSM and Universal Mobile Telecommunications System (referred to as UMTS), in addition to the packet access networks such as EPS, General Packet Radio Service (referred to as GPRS), and Wireless Local Area Network (referred to as WLAN).

After the UE is attached to the network, an Access Point Name (referred to as APN) will be established, and the SGSN will determine whether to establish a PDN connection to the GGSN or to the PGW for the user according to the capability information proved by the UE and the information of local configuration. Once the PDN connection is established, the GGSN or PGW serves as an anchor for the PDN connection linking to the external PDN network. That is, for the PDN connection, the GGSN or PGW will not change, unless the PDN connection is released.

If the location of the UE has changed and a routing area has changed, the UE will initiate update of the location of the routing area. Figure 2 is a flowchart of routing update of the UE according to relevant technology. As shown in Figure 2, the flow includes the following steps.

Step 201, the UE initiates a routing area update request, and the request is sent to a new SGSN through the BSC/SRNS, and the request carries a valid Temporary Mobile Subscriber Identity (referred to as P-TMSI) and the type of routing area updating.

Steps 202-203, the new SGSN requests context information of the UE from the old SGSN according to the P-TMSI.

Step 204, for security purpose, the process of authentication and encryption is performed. This step is optional, however if no context information of the UE exists in the network, the step must be carried out.

Step 205, after receiving the context information of the UE, the new SGSN returns a context request acknowledge message to the old SGSN.

Steps 206-207, the new SGSN sends an update PDP request to the GGSN, wherein the update PDP request carries TEID and IP address of the new SGSN, and the GGSN stores the information and returns an update PDP response to the new SGSN.

Step 208, the new SGSN and the HSS send an update location carrying an identifier of the new SGSN, and the HSS stores the identifier.

Steps 209-210, the HSS sends a cancel location to the old SGSN, and the HSS will no longer store the identifier of the old SGSN after the old SGSN returns a cancel location acknowledge to the HSS.

Steps 211-212, the HSS inserts subscriber data into the new SGSN.

Step 213, the HSS returns an update location acknowledge to the new SGSN.

Step 214, the new SGSN confirms that the UE is valid in the current routing area, and sends to the UE a routing area update accept message carrying P-TMSI re-assigned to the UE.

Step 215, the UE returns a routing area update complete message to the SGSN to confirm that the P-TMSI is valid.

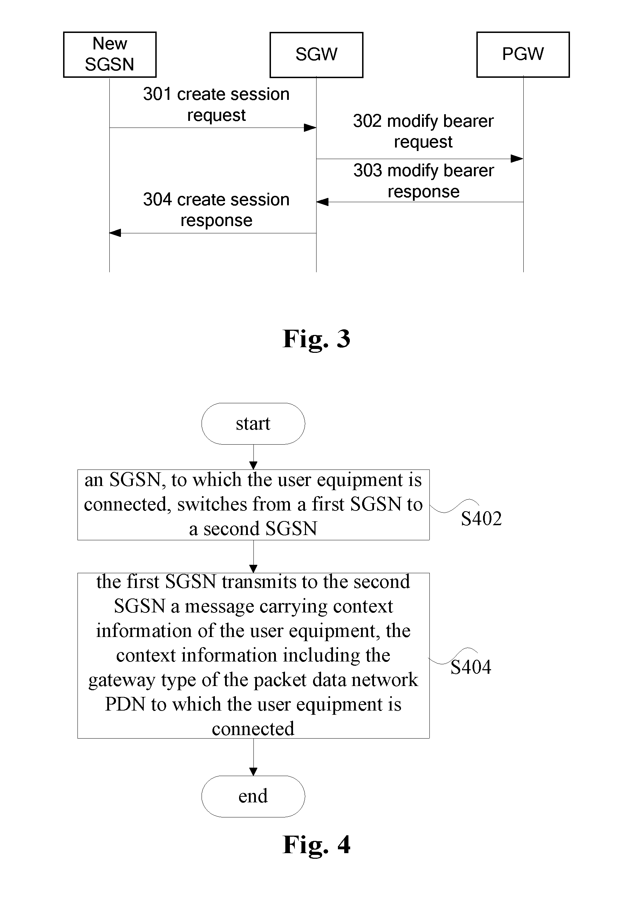

For step 206 and step 207 in the block diagram A of Figure 2, assume that the new SGSN is connected to the GGSN by using a Gn/Gp interface. Figure 3 is a flow schematic diagram of the SGSN employing an S4 interface according to relevant technology. If the GGSN serves as a co-located functional module of the PGW, as shown in Figure 3, the updating flow of a bearer between the SGSN and the PGW includes the following steps.

Step 301, the SGSN sends to the SGW a create session request carrying TEID and IP address of the PGW, TEID and IP address of the SGSN, bearer context and user identifier information.

Step 302, the SGW finds the PGW according to the information provided by the SGSN, and sends to the PGW a modify bearer request including TEID and address of the SGW and user identifier information.

Step 303, the PGW returns the modify bearer response including TEID and address of the PGW.

Step 304, the SGW returns the create session response carrying TEID and address of the S-GW.

As mentioned above, since the GGSN previously serves as a co-located functional unit of the PGW, the new SGSN not only can be connected to the GGSN through a Gn/Gp interface, but also can be connected, through the SGW, to the GGSN co-located in the PGW. However, as the EPC provides some new network characteristics, for the SGSN which supports both the Gn/Gp interface and the S4 interface, an effective selection mechanism is required such that the SGSN can select network elements according to the situations thereof.

### Summary of the Invention

The present invention is provided in view of the lack of a selection mechanism for the SGSN to select the Gn/Gp interface or the S4 interface in relevant technology. Thus, the present invention mainly aims to provide an SGSN-based message sending method so as to solve at least one the above problems.

In order to achieve the above object, according to one aspect of the present invention, a message sending method is provided.

The message sending method according to the present invention comprises: when the SGSN, to which user equipment is connected, switches from a first SGSN to a second SGSN, the first SGSN sending to the second SGSN a message carrying context information of the user equipment, wherein the context information including the gateway type of packet data network to which the user equipment is connected.

Preferably, after the first SGSN sends the message to the second SGSN, the method also comprises: the second SGSN receiving the message and acquiring from the message the gateway type of packet data network to which the user equipment is connected, and determining, according to the gateway type, the type of an interface which is used by the second SGSN for connecting the gateway of the packet data network.

Preferably, the second SGSN acquiring from the message the gateway type of packet data network to which the user equipment is connected comprises: the second SGSN acquiring the gateway type from the fully qualified domain name of the gateway included in the message, wherein when the message includes the fully qualified domain name of a combined gateway, the gateway type acquired is packet data network gateway PGW; when the message does not include the fully qualified domain name of the combined gateway, the gateway type acquired is gateway GPRS supporting node GGSN.

Preferably, the second SGSN determining, according to the gateway type, the type of an interface selected by the second SGSN comprises: in the case that the gateway type is packet data network gateway PGW, determining that connecting to the gateway of the packet data network is through an interface of S4 type; in the case where the gateway type is gateway GPRS supporting node GGSN, determining that connecting to the gateway of the packet data network is through an interface of Gn/Gp type.

Preferably, before the first SGSN sends the message to the second SGSN, the method further comprises: the first SGSN determining the gateway type, and stores the gateway type in the context information of the user equipment.

Preferably, the first SGSN determining the gateway type comprises: the first SGSN determining the gateway type according to information pre-configured locally; the first SGSN determining the gateway type according to information provided by the user equipment and/or subscription information.

In order to achieve the above object, according to another aspect of the present invention, an SGSN is provided.

The SGSN according to the present invention comprises: a sending module adapted to send, when the user equipment initiates a serving GPRS support node SGSN switching, a message carrying context information of the user equipment to a target SGSN, wherein the context information includes the gateway type of packet data network to which the user equipment is connected.

Preferably, the SGSN further comprises: a first determination module adapted to determine a gateway type; and a storing module adapted to store the gateway type in the context information of the user equipment.

Preferably, the first determination module comprises: a first determination sub-module adapted to determine the gateway type according to information pre-configured locally; a second determination sub-module adapted to determine the gateway type according to information provided by the user equipment and/or subscription information.

Preferably, the SGSN further comprises: a receiving module adapted to receive, when the user equipment initiates an SGSN switching, a message from a source SGSN, wherein the message carries the gateway type of packet data network to which the user equipment is connected; an acquisition module adapted to acquire the gateway type from the message; and a second determination module adapted to determine, according to the gateway type, the type of an interface which is used by the SGSN for connecting the gateway of the packet data network.

Preferably, the acquisition module comprises: a first acquisition sub-module adapted to acquire, when the message includes the fully qualified domain name of a combined gateway, the gateway type to be PGW; and a second acquisition sub-module for acquiring, when the message does not include the fully qualified domain name of the combined gateway, the gateway type to be GGSN.

Preferably, the second determination module comprises: a first connection sub-module adapted to be connected to the gateway of the packet data network through an interface of S4 type, in the case that the gateway type is PGW; and a second connection sub-module adapted to be connected to the gateway of the packet data network through an interface of Gn/Gp type, in the case that the gateway type is GGSN.

Through the present invention, the message sent from the old SGSN to the new SGSN carries the gateway type of packet data network PDN to which the user equipment is connected. It settles the problem of the lack of a mechanism in relevant technology for the new SGSN to select a Gn/Gp interface or an S4 interface, and thereby achieves the effects that the new SGSN can acquire the gateway type of the packet data network PDN and correctly select the type of an interface according to the gateway type.

### Brief Description of the Drawings

The drawings herein are used to provide further understanding of the present invention and form a part of the specification. The embodiments of the present invention and the description thereof are used to explain the present invention rather than unduly limit the present invention. In the accompanying drawings:
Figure 1 is a schematic diagram of network architecture according to relevant technology;
Figure 2 is a flowchart of routing update of the UE according to relevant technology;
Figure 3 is a flow schematic diagram of the SGSN employing an S4 interface according to relevant technology;
Figure 4 is a flowchart of the message sending method according to an embodiment of the present invention;
Figure 5 is a flowchart of the SGSN selecting a network element in the process of routing area updating of the UE according to an embodiment of the present invention;
Figure 6 is a flowchart of the SGSN in the process of switching the connection state of the UE according to an embodiment of the present invention;
Figure 7 is a flowchart of the operations after the SGSN determines that an S4 interface is used according to an embodiment of the present invention; and
Figure 8 is a structural block diagram of the SGSN according to an embodiment of the present invention.

### Detailed Description of the Preferred Embodiments

It shall be explained that the embodiments of the present invention and the features of the embodiments can be combined with each other if there is no conflict. The present invention is described in detail as follows with reference to the drawings and in conjunction with the embodiments. In the following embodiments, the steps shown or described in the flowcharts in the drawings can be carried out in an order that is different from the order described herein.

### Method Embodiments

According to an embodiment of the present invention, a message sending method is provided. The method is used when the SGSN undergoes changes, viz. the method is a scheme for performing routing selection when the SGSN undergoes changes. Figure 4 is a flowchart of the message sending method according to an embodiment of the present invention. As shown in Figure 4, the method comprises the steps of step S402 to step S404.

Step S402, an SGSN, to which the user equipment is connected, switches from a first SGSN (old SGSN) to a second SGSN (new SGSN).

Step S404, the first SGSN sends to the second SGSN a message which carries context information of the user equipment, wherein the context information includes the gateway type of the packet data network PDN to which the user equipment is connected. That is, during the process of sending the context information of the UE, the new SGSN is notified of the gateway type chosen by the SGSN in the PDN connection. The gateway type can be realized through an extended parameter. For example, the gateway type can be determined by Fully Qualified Domain Name (referred to as FQDN) of the gateway selected. When the context information includes the FQDN of a combined gateway (GGSN co-located in PGW), the gateway is regarded as GGSN co-located in PGW, and if the context information does not include the FQDN of the combined gateway (GGSN is co-located in PGW), the gateway is regarded as individual GGSN.

After step S404, the second SGSN receives the message and acquires the gateway type from the message, and determines, according to the gateway type, the type of an interface which is used by the second SGSN for connecting the gateway of the PDN. The interface type includes S4 and Gn/Gp, viz. the new SGSN determines, according to the information, whether to use an S4 interface to connect the PGW through the SGW, or to connect the GGSN through a Gn/Gp interface.

Before step S402, the first SGSN determines the gateway type, and stores the gateway type in the context information of the user equipment. That is, when establishing APN connection for the UE, the old SGSN records the gateway type of the packet data network selected by the SGSN, viz. whether the GGSN is an independent node or is a co-located functional entity of the PGW. The gateway type can be realized by an extended parameter. For example, the gateway type can be determined by the FQDN of the gateway selected. When the context information includes the FQDN of a combined gateway (GGSN is co-located in PGW), the gateway is regarded as GGSN is co-located in PGW, and if the context information does not include the FQDN of the combined gateway (GGSN is co-located in PGW), the gateway is regarded as individual GGSN. A dynamic method and a static method can be used to determine the type of the interface. The static method is that the first SGSN determines the gateway type according to the information locally pre-configured; and the dynamic method is that the first SGSN determines the gateway type according to the information provided by the user equipment and/or subscription information. The two methods are described in detail hereinafter.

If the method of static configuration is used, then the SGSN statically configures the type of the gateway which can be selected by the PDN connection that the UE can establish; and at the same time, the SGSN also needs to record the type of the selected gateway in the context information of the UE.

If the method of dynamic selection is used, then the SGSN selects one GGSN through DNS search according to the information provided by the UE and/or subscription information, and the SGSN records the type of the selected gateway in the context information of the UE.

The implementing process of the embodiments of the present invention is described in detail in conjunction with examples hereinafter.

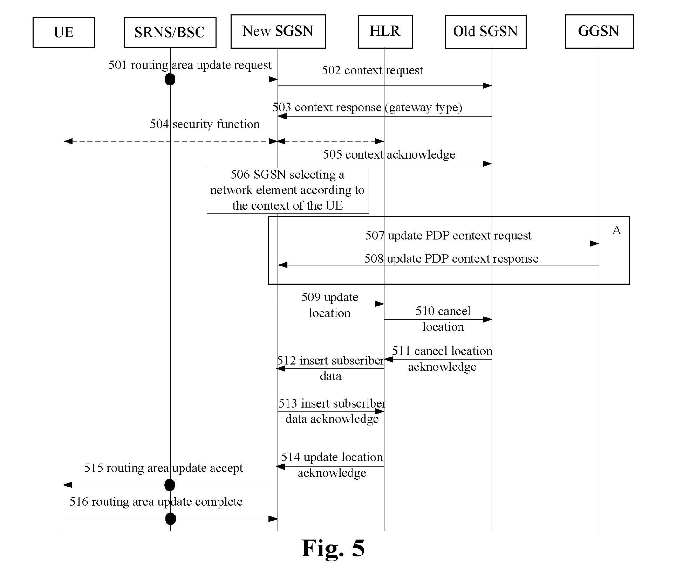

Figure 5 is a flowchart of the SGSN selecting a network element in the process of routing area updating of the UE according to an embodiment of the present invention. As shown in Figure 5, the flow includes the following steps.

Step 501, the UE initiates a routing area update request, and the request is sent to a new SGSN through the BSC/SRNS, wherein the request carries a valid P-TMSI and the type of routing area updating.

Step 502, the new SGSN requests context information of the UE from the old SGSN according to the P-TMSI.

Step 503, the context information of the UE returned by the old SGSN to the new SGSN contains the type of the gateway selected by the PDN connection of the UE.

Step 504, for security purpose, the process of authentication and encryption is performed. The step is optional, however if no context information of the UE exists in the network, the step must be carried out.

Step 505, after receiving the context of the UE, the new SGSN returns a context request acknowledge message to the old SGSN.

Step 506, the new SGSN selects an appropriate network element according to the context information of the UE returned by the old SGSN.

If the GGSN is an independently deployed network element, the new SGSN is directly connected to the GGSN using a Gn/Gp interface. The specific flow is as shown in the block diagram A of Figure 5.

If the GGSN is a functional entity co-located in the PGW, the new SGSN is connected to the PGW through the SGW using an S4 interface. The specific flow is as shown in Figure 3 which is the related art, and no detailed description is repeated herein.

Further, if the SGSN employs an S4 interface, the SGSN further needs to accomplish the mapping of PDP context to EPS bearer, and no detailed description is given herein.

Steps 507-508, the new SGSN sends an update PDP request to the GGSN, wherein the update PDP request carrying TEID and IP address of the new SGSN; and the GGSN stores the information and returns an update PDP response to the new SGSN.

Step 509, the new SGSN and the HSS send an update location carrying an identifier of the new SGSN, and the HSS stores the identifier.

Steps 510-511, the HSS sends a cancel location to the old SGSN, and the HSS will no longer store the identifier of the old SGSN, after the old SGSN returns a cancel location acknowledge to the HSS.

Steps 512-513, the HSS inserts subscriber data into the new SGSN.

Step 514, the HSS returns an update location response to the new SGSN.

Step 515, the new SGSN confirms that the UE is valid in the current routing area, and sends to the UE a routing area update accept message carrying the P-TMSI re-assigned to the UE.

Step 516, the UE returns a routing area update accomplishing message to the SGSN to confirm the validity of the P-TMSI.

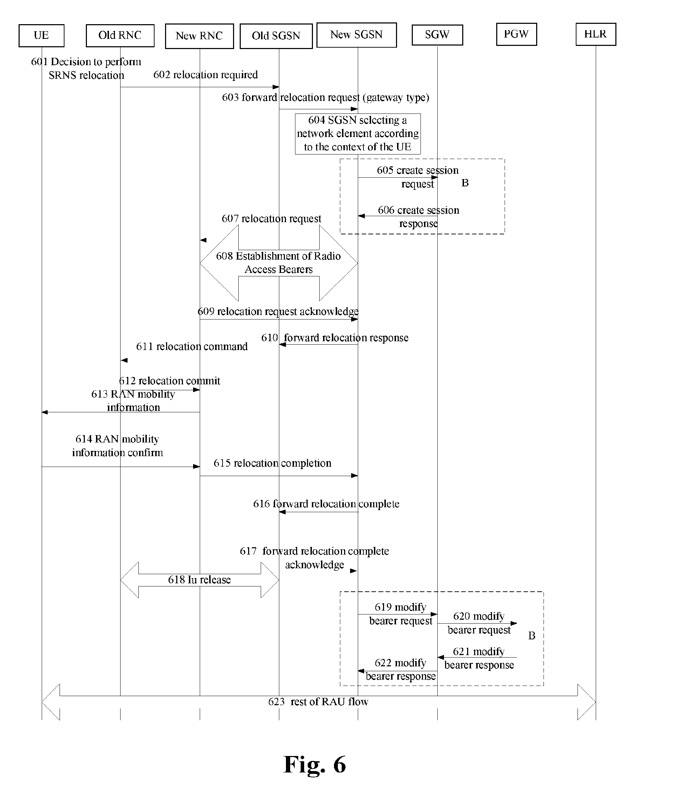

Figure 6 is a flowchart of the SGSN in the process of switching the connection state of the UE according to an embodiment of the present invention. As shown in Figure 6, the flow includes the following steps.

Step 601, the old RNC determines, according to the information reported by the UE, that a switching flow needs to be performed.

Step 602, the old RNC sends to the old SGSN an SRNS relocation required carrying relocation cause, identifiers of a source end and a destination end, and a container transparently sent by the old RNC to the new RNC through a core network.

Step 603, the old SGSN sends to the new SGSN a forward relocation request carrying the context information of the UE, wherein the context information of the UE includes the type of the gateway selected by the PDN connection of the UE.

Step 604, the new SGSN selects an appropriate network element according to the context information of the UE returned by the old SGSN.

If the GGSN is an independently deployed network element, the new SGSN is directly connected to the GGSN using a Gn/Gp interface. The flow in the block diagram B of Figure 6 does not need to be performed herein.

If the GGSN is a functional entity co-located in the PGW, the new SGSN is connected to the PGW through the SGW using an S4 interface. Steps 605-606 need to be carried out herein.

Further, if the SGSN employs an S4 interface, the SGSN further needs to accomplish the mapping of PDP context to EPS bearer, and no detailed description is given herein.

Step 605, the SGSN sends to the SGW a create session request carrying TEID and IP address of the PGW, TEID and IP address of the SGSN, bearer context and user identifier information.

Step 606, the SGW returns the create session response carrying TEID and address of the S-GW.

Step 607, the new SGSN sends to the new RNC a relocation request carrying an identifier of the UE, a bearer which needs to be established, and a container transparently sent by the old RNC to the new RNC through a core network.

Step 608, a radio bearer is established for the UE between the new SGSN and the new RNC.

Step 609, the new RNC returns a relocation request acknowledge to the new SGSN.

Step 610, the new SGSN sends a forward relocation response to the old SGSN.

Step 611, the old SGSN sends a relocation command to the old RNC to notify the old RNC to start switching.

Step 612, the old RNC sends to the new RNC an SRNS relocation commit carrying SRNS context of the UE.

Steps 613-614, the new RNC interacts with the UE for RAN mobility information.

Step 615, the new RNC sends SRNS relocation complete to the new SGSN, notifying that wireless switching has been completed.

Steps 616-617, the new SGSN sends forward relocation complete to the old SGSN, notifying that the UE has been switched to a new network, and the old SGSN returns an acknowledgement message.

Step 618, the old SGSN releases an Iu interface between the old SGSN and the old RNC.

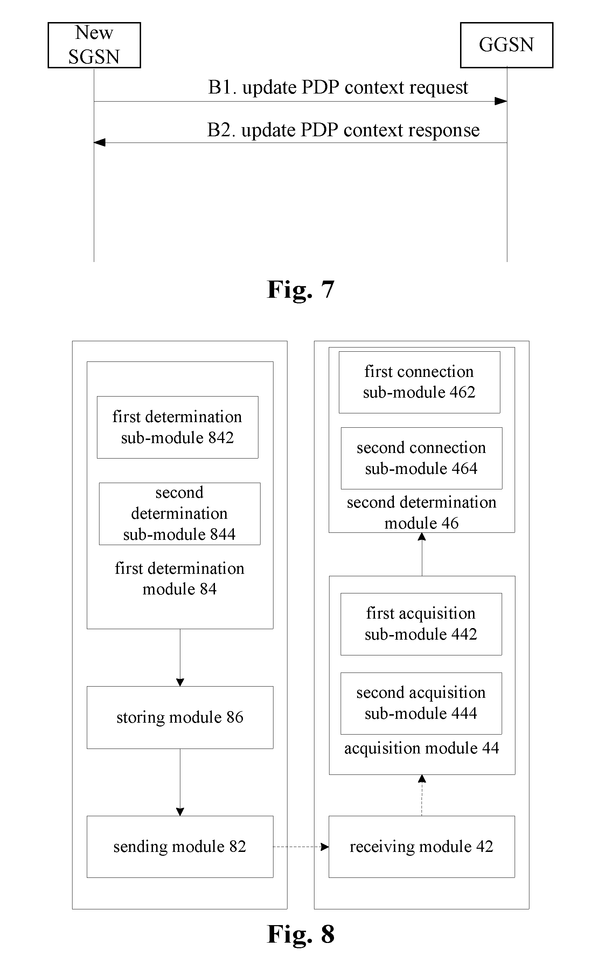

If in step 604, the SGSN determines that an S4 interface is used, steps 619-622 need to be carried out herein; otherwise steps B1-B2 in Figure 7 are carried out. The steps B1 B1-B2 will be described in detail.

Step 619, the SGSN sends to the SGW a modify bearer request carrying TEID and IP address of the PGW, TEID and IP address of the SGSN, bearer context and user identifier information. If Direct Tunnel is supported, the request contains TEID and IP address of the new RNC.

Step 620, the SGW finds the PGW according to the information provided by the SGSN, and sends to the PGW a modify bearer request including TEID and address of the SGW and user identifier information.

Step 621, the PGW returns the modify bearer response including TEID and address of the PGW

Step 622, the SGW returns the modify bearer response carrying TEID and address of the S-GW.

Figure 7 is a flowchart of the operations after the SGSN determines that an S4 interface is used according to an embodiment of the present invention. As shown in Figure 7, the flow includes steps B1-B2. The new SGSN sends to the GGSN a update PDP request carrying TEID and IP address of the new SGSN, and the GGSN stores the information, and returns an update PDP response to the new SGSN. If Direct Tunnel is supported, the request contains TEID and IP address of the new RNC.

Step 623, the RAU flow is performed. The flow is publicly known technology for those skilled in the art, and no detailed description is given herein.

Preferably, the determining of the gateway type of the packet data network can be achieved through, but not limited to, the following two methods:
Method 1
   Use the method of static configuration, viz. the SGSN statically configures the type of the gateway the PDN can select, and at the same time, the SGSN also needs to record the type of the selected gateway in the context information of the UE.
Method 2
   Use the method of dynamic selection, viz. the SGSN selects one GGSN through the DNS search according to the information provided by the UE and/or user subscription information, and the SGSN records the type of the selected gateway in the context of the UE.

Preferably, the gateway type of the packet data network can be, but is not limited to, the types of:
type 1, GGSN or PGW; and
type 2, an independently deployed GGSN, or the GGSN serving as the co-located functional module of the PGW.

### Apparatus Embodiments

According to an embodiment of the present invention, an SGSN is provided. Figure 8 is a structural block diagram of the SGSN according to an embodiment of the present invention. As shown in Figure 8, the SGSN comprises: a sending module 82 adapted to send, when the user equipment initiates a serving GPRS support node SGSN switching, a message carrying context information of the user equipment to a target SGSN, wherein the context information includes the gateway type of the PDN to which the user equipment is connected. The gateway type can be realized by an extended parameter. For example the gateway type can be determined by the FQDN of the gateway selected. When the context information includes the FQDN of a combined gateway (GGSN is co-located in PGW), the gateway is regarded as GGSN is co-located in PGW, and if the context information does not include the FQDN of the combined gateway (GGSN is co-located in PGW), the gateway is regarded as independent GGSN.

As shown in Figure 8, the SGSN also comprises: a first determination module 84 adapted to determine a gateway type; and a storing module 86, connected to the first determination module 84 and the sending module 82, adapted to store the gateway type in the context information of the user equipment.

The first determination module 84 comprises: a first determination sub-module 842 adapted to determine the gateway type according to information pre-configured locally; and a second determination sub-module 844 adapted to determine the gateway type according to information provided by the user equipment and/or subscription information.

It shall be explained that the storing module 86, the first determination module 84 and the sending module 82 correspond to the first SGSN (viz. the old SGSN) in the method embodiments. The following receiving module 42, acquisition module 44 and the second determination module 46 correspond to the second SGSN (viz. the new SGSN) in the method embodiments.

As shown in Figure 8, the SGSN also comprises: a receiving module 42, an acquisition module 44 and a second determination module 46, which are specifically described as follows.

The receiving module 42 is adapted to receive a message from a source SGSN, wherein the message carries the gateway type of the PDN to which the user equipment is connected, when the user equipment initiates an SGSN switching; the acquisition module 44 is connected to the receiving module 42 and adapted to acquire the gateway type from the message; and the second determination module 46 is connected to the acquisition module 44 and adapted to determine, according to the gateway type, the type of an interface which is used by the SGSN for connecting the gateway of the packet data network.

The acquisition module 44 comprises: a first acquisition sub-module 442 adapted to acquire the gateway type to be PGW, when the message includes the fully qualified domain name of a combined gateway; and a second acquisition sub-module 444 adapted to acquire the gateway type to be GGSN, when the message does not include the fully qualified domain name of the combined gateway.

The second determination module 46 comprises: a first connection sub-module 462 adapted to be connected to the gateway of the packet data network through an interface of S4 type, in the case that the gateway type is PGW; and a second connection sub-module 464 adapted to be connected to the gateway of the packet data network through an interface of Gn/Gp type, in the case that the gateway type is GGSN.

As mentioned above, the embodiments of the present invention solve the problem of the lack of a selection mechanism in relevant art for the SGSN to select a Gn/Gp interface or an S4 interface. Thereby, they achieve the effects that the new SGSN can acquire the type of the interface to which the PDN is connected and correctly select the network element connected according to the type of the interface.

Obviously, those skilled in the art should understand that all of the above modules or steps of the present invention can be realized by a universal computing device. They can be integrated in a single computing device, or distributed in the network consisting of several computing devices. Preferably, they can be realized by program codes executable by the computing device, such that they can be stored in a storage device to be executed by the computing device. Or, each of them can be manufactured into an integrated circuit module, or several modules or steps of them can be manufactured into a single integrated circuit module. In this way, the present invention is not limited to the combination of any particular hardware and software.

The descriptions above are only preferable embodiments of the present invention, which are not used to restrict the present invention. For those skilled in the art, the present invention may have various changes and variations. Any amendments, equivalent substitutions, improvements etc. within the spirit and principle of the present invention are all concluded in the scope of the claims of the present invention.

## Claims

1. A message sending method, **characterized by** comprising:
when a serving general packet radio service (GPRS) support node (SGSN), to which a user equipment is connected, switches from a first SGSN to a second SGSN, the first SGSN sending to the second SGSN a message carrying context information of the user equipment, wherein the context information comprises a gateway type of a packet data network to which the user equipment is connected.

2. The method according to Claim 1, **characterized in that**, after the first SGSN sends the message to the second SGSN, the method further comprises:
the second SGSN receiving the message and acquiring from the message the gateway type of packet data network to which the user equipment is connected, and determining, according to the gateway type, the type of an interface which is used by the second SGSN for connecting the gateway of the packet data network.

3. The method according to Claim 1, **characterized in that** the second SGSN acquiring from the message the gateway type of packet data network to which the user equipment is connected comprises:
the second SGSN acquiring the gateway type from a fully qualified domain name of the gateway comprised in the message, wherein when the message comprises the fully qualified domain name of a combined gateway, the gateway type acquired is packet data network gateway (PGW); and when the message does not comprise the fully qualified domain name of the combined gateway, the gateway type acquired is gateway GPRS supporting node (GGSN).

4. The method according to Claim 3, **characterized in that** the second SGSN determining, according to the gateway type, the type of an interface selected by the second SGSN comprises:
in the case that the gateway type is PGW, determining that connecting to the gateway of the packet data network is through an interface of S4 type; and
in the case that the gateway type is GGSN, determining that connecting to the gateway of the packet data network is through an interface of Gn/Gp type.

5. The method according to Claim 1, **characterized in that**, before the first SGSN sends the message to the second SGSN, the method further comprises:
the first SGSN determining the gateway type, and storing the gateway type in the context information of the user equipment.

6. The method according to Claim 5, **characterized in that** the first SGSN determining the gateway type comprises:
the first SGSN determining the gateway type according to information pre-configured locally; and
the first SGSN determining the gateway type according to information provided by the user equipment and/or subscription information.

7. A serving general packet radio service (GPRS) support node (SGSN), **characterized by** comprising:
a sending module adapted to send, when a user equipment initiates a serving GPRS support node switching, a message carrying context information of the user equipment to a target SGSN, wherein the context information comprises a gateway type of packet data network to which the user equipment is connected.

8. The SGSN according to Claim 7, **characterized in that** the SGSN further comprises:
a first determination module adapted to determine the gateway type; and
a storing module adapted to store the gateway type in the context information of the user equipment.

9. The SGSN according to Claim 8, **characterized in that** the first determination module comprises:
a first determination sub-module adapted to determine the gateway type according to information pre-configured locally; and
a second determination sub-module adapted to determine the gateway type according to information provided by the user equipment and/or subscription information.

10. The SGSN according to any one of Claims 7-9, **characterized in that** the SGSN further comprises:
a receiving module adapted to receive, when the user equipment initiates an SGSN switching, a message from a source SGSN, wherein the message carries the gateway type of packet data network to which the user equipment is connected;
an acquisition module adapted to acquire the gateway type from the message; and
a second determination module adapted to determine, according to the gateway type, the type of an interface which is used by the SGSN for connecting the gateway of the packet data network.

11. The SGSN according to Claim 10, **characterized in that** the acquisition module comprises:
a first acquisition sub-module adapted to acquire the gateway type to be PGW, when the message comprises a fully qualified domain name of a combined gateway; and
a second acquisition sub-module adapted to acquire the gateway type to be GGSN, when the message does not comprise the fully qualified domain name of the combined gateway.

12. The SGSN according to Claim 11, **characterized in that** the second determination module comprises:
a first connection sub-module adapted to be connected to the gateway of the packet data network through an interface of S4 type, in the case that the gateway type is PGW; and
a second connection sub-module adapted to be connected to the gateway of the packet data network through an interface of Gn/Gp type, in the case that the gateway type is GGSN.
